# EUROPEAN PATENT APPLICATION

(11) **EP 4 847 310 A1**
(43) Date of publication of application: **02.12.2026**
(21) Application number: 26180685.5
(22) Date of filing: 22.05.2026
(51) Int. Cl.: B60N 2/28

(54) **CHILD SAFETY SEAT LATCH POD CONNECTOR MODULE**

(30) Priority: 29.05.2025 US 202563814049 P
(71) Applicant: Britax Child Safety Inc., Fort Mill, SC 29708 (US)
(72) Inventor: Stacey, Angela, St. John s Newfoundland, A1A0A2 (US); Bryant, Joseph, Fort Mill, 29708 (US); Walsh, Quentin, Fort Mill, 29708 (US); Calvert, Michael, Fort Mill, 29708 (US)
(74) Representative: K&L Gates LLP

(57) **Abstract**

A child safety seat system including a child safety seat, a base, and a latch pod connector module, where the child safety seat is selectively couples to the latch pod connector module, where the latch pod connector module selectively couples to the base, and where the base is configured to selectively couple to a vehicle seat. A latch pod connector module comprises a connection mechanism configured to couple to a vehicle seat. A method of using a latch pod connector child safety seat system, where the system includes a child safety seat, a base and a latch pod connector module, the method including coupling the child safety seat to the latch pod connector module, coupling the base to the latch pod connector module, and coupling the base to a vehicle seat.

## Description

### PRIORITY CLAIM AND CROSS-REFERENCE TO RELATED APPLICATION

The present application claims priority to and benefit of U.S. Provisional Patent Application No. 63/814,049 filed May 29, 2025, titled "CHILD SAFETY SEAT LATCH POD CONNECTOR MODULE," the disclosure of which is incorporated by reference herein in its entirety and relied upon.

### BACKGROUND

Child restraint systems, also commonly called child safety seats, child seats, car seats, among others, are designed to protect children in vehicles from the effects of impacts or sudden changes in motion (e.g., sudden acceleration, sudden deceleration, and the like). Child restraint systems, referred to hereinafter as child safety seats, may be used in a variety of vehicles with different seat types and/or seating configurations. Child safety seats are often secured to vehicle seats using attachment mechanisms like ISOFIX or LATCH. Alternatively, child safety seats can be secured to ICS bases ("bases") which are secured to vehicle seats.

However, attachment mechanisms like ISOFIX or LATCH are heavy and take up a lot of space. Also, the attachment mechanisms are fixedly coupled to child safety seats. As such, users are limited in their ability to use current child safety seats in urban, non-vehicle transport settings, such as walking around the city. In turn, there is a need for a selectively coupled latch pod connector module that allows users to choose when they connect and use an attachment mechanism to their child safety seat, when they connect their child safety seat to a base, and when they use their child safety seat without an attachment mechanism.

### SUMMARY

Example systems, methods, and apparatus are disclosed herein a child safety seat latch pod connector module.

Aspects of the subject matter described herein may be useful alone or in combination with one or more other aspects described herein. In an exemplary aspect of the present disclosure, a child safety seat system including a child safety seat, a base, and a latch pod connector module, where the child safety seat is selectively couples to the latch pod connector module, where the latch pod connector module selectively couples to the base, and where the base is configured to selectively couple to a vehicle seat.

In a second aspect of the present disclosure, which may be combined with any other aspect listed herein unless specified otherwise, the base comprises an actuator.

In a third aspect of the present disclosure, which may be combined with any other aspect listed herein unless specified otherwise, the actuator is operatively coupled to an engagement component.

In a fourth aspect of the present disclosure, which may be combined with any other aspect listed herein unless specified otherwise, the engagement component moves when the actuator is engaged.

In a fifth aspect of the present disclosure, which may be combined with any other aspect listed herein unless specified otherwise, the actuator engages an ICS lock on the base to selectively couple the base to the latch pod connector module.

In a sixth aspect of the present disclosure, which may be combined with any other aspect listed herein unless specified otherwise, the actuator engages at least one locking arm on the child safety seat to selectively couple the child safety seat to the latch pod connector module.

In a seventh aspect of the present disclosure, which may be combined with any other aspect listed herein unless specified otherwise, when the child safety seat couples to the latch pod connector module, the latch pod connector module de-couples from the base.

In an eight aspect of the present disclosure, which may be combined with any other aspect listed herein unless specified otherwise, when the base couples to the latch pod connector module, the latch pod connector module de-couples from the child safety seat.

In a nineth aspect of the present disclosure, which may be combined with any other aspect listed herein unless specified otherwise, the base couples to the vehicle seat via a vehicle belt.

In a tenth aspect of the present disclosure, which may be combined with any other aspect listed herein unless specified otherwise, a latch pod connector module comprises a connection mechanism configured to couple to a vehicle seat.

In an eleventh aspect of the present disclosure, which may be combined with any other aspect listed herein unless specified otherwise, the connection mechanism is one of an ISOFIX, LATCH, LUAS, or Carfix mechanism.

In a twelfth aspect of the present disclosure, which may be combined with any other aspect listed herein unless specified otherwise, a latch pod connector module including at least one locking arm, an ICS lock, and a connection mechanism.

In a thirteenth aspect of the present disclosure, which may be combined with any other aspect listed herein unless specified otherwise, the at least one locking arm is configured to connect to a child safety seat to couple the latch pod connector to the child safety seat, and the at least one locking arm is activated via an actuator.

In a fourteenth aspect of the present disclosure, which may be combined with any other aspect listed herein unless specified otherwise, the ICS lock is configured to connect to a base to couple the latch pod connector to the base and the ICS lock is activated via an actuator.

In a fifteenth aspect of the present disclosure, which may be combined with any other aspect listed herein unless specified otherwise, the connection mechanism is configured to couple to a vehicle seat.

In a sixteenth aspect of the present disclosure, which may be combined with any other aspect listed herein unless specified otherwise, the connection mechanism is one of an ISOFIX, LATCH, LUAS, or Carfix mechanism.

In a seventeenth aspect of the present disclosure, which may be combined with any other aspect listed herein unless specified otherwise, a method of using a latch pod connector child safety seat system, where the system includes a child safety seat, a base and a latch pod connector module, the method including coupling the child safety seat to the latch pod connector module, coupling the base to the latch pod connector module, and coupling the base to a vehicle seat.

In an eighteenth aspect of the present disclosure, which may be combined with any other aspect listed herein unless specified otherwise, comprising engaging an actuator on the base to selectively couple the base to the latch pod connector module.

In a nineteenth aspect of the present disclosure, which may be combined with any other aspect listed herein unless specified otherwise, comprising engaging an actuator on the base to selectively couple the child safety seat to the latch pod connector module.

In a twentieth aspect of the present disclosure, which may be combined with any other aspect listed herein unless specified otherwise, when the child safety seat couples to the latch pod connector module, the latch pod connector module de-couples from the base and wherein when the base couples to the latch pod connector module, the latch pod connector module de-couples from the child safety seat.

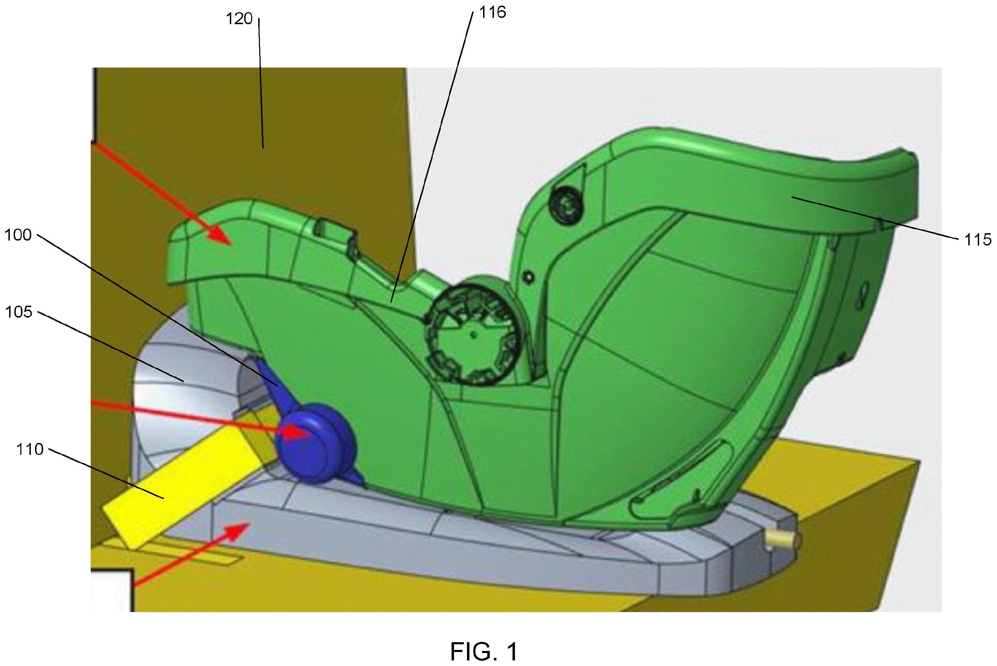

In a twenty-first aspect of the present disclosure, any of the structure, functionality, and alternatives disclosed in connection with any one or more of Figs. 1 to 4 may be combined with any other structure, functionality, and alternatives disclosed in connection with any other one or more of Figs. 1 to 4.

In light of the present disclosure and the above aspects, it is therefore an advantage of the present disclosure to provide users with a child safety seat latch pod connector module.

Additional features and advantages are described in, and will be apparent from, the following Detailed Description and the Figures. The features and advantages described herein are not all-inclusive and, in particular, many additional features and advantages will be apparent to one of ordinary skill in the art in view of the figures and description. In addition, any particular embodiment does not have to have all of the advantages listed herein and it is expressly contemplated to claim individual advantageous embodiments separately. Moreover, it should be noted that the language used in the specification has been selected principally for readability and instructional purposes, and not to limit the scope of the inventive subject matter.

### BRIEF DESCRIPTION OF THE FIGURES

The specification makes reference to the following appended figures, in which use of like reference numerals in different figures is intended to illustrate like or analogous components.
Figure 1 illustrates a perspective view of a child safety seat, base and latch pod connector module assembly in an engaged configuration, according to various embodiments.
Figure 2 illustrates a perspective view of a child safety seat coupled to a child safety seat latch pod connector module, according to various embodiments.
Figure 3 illustrates a perspective view of a base coupled to a child safety seat latch pod connector module, according to various embodiments.
Figure 4 illustrates a perspective view of a base according to various embodiments.

### DETAILED DESCRIPTION

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specific the presence of stated features, integers, steps, operations, elements, and/or components, but do not preclude the presence or additional of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent"). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Figure 1 illustrates a perspective view of a child safety seat, base, and latch pod connector module assembly in an engaged configuration. As seen in Figure 1, the child seat safety seat and base assembly 116 includes a child safety seat 115 that is selectively coupled to a base 105 via a latch pod connector module 100. The assembly 116 sits on a vehicle seat 120 and is configured to receive and hold a vehicle belt 110 in place. Specifically, the user can place the base 105 on the vehicle seat 120, route the vehicle belt on top of the base 105, and then place the latch pod connector module 100, which is selectively coupled to the child safety seat 115, on top. As such, in use, the assembly 116 secures to the vehicle seat 120. Moreover, the latch pod connector module 100 couples to the front of the child safety seat 115, right below the seating portion.

It should be noted that the latch pod connector module 100 can be selectively coupled to the base 105 or the child safety seat 115, but the latch pod connector module 100 is always coupled to one of the base 105 or the child safety seat 115. This means the latch pod connector module 100 cannot be decoupled from the base 105 and the child safety seat 115 at the same time. The latch pod connector module 100 couples to the base 105 or the child safety seat 115 via coupling mechanisms further described below.

As such, the user can, for example, leave the base 105 with the latch pod connector module 100 coupled in their car and simply remove the child safety seat 115. As such, the user can carry the child safety seat 115 without the extra weight of the latch pod connector module 100. In this example, the user could prefer this configuration if they mainly utilize their child safety seat 115 to carry their child outside of a vehicle - such as walking with their child around a city, or to hold the child while they nap at home. Whenever the user needs to transport the child in their vehicle, the user can simply selectively couple the child safety seat 115 to the latch pod connector module 100. Because the base 105 and latch pod connector module 100 are already secured to the vehicle seat 120, then the child safety seat 115 is secured to the vehicle seat. In an embodiment, the user uncouples the child safety seat 115 from a first latch pod connector module 100 in a first car, and subsequently couples the child safety seat 115 (at a later point in time) to a second latch pod connector module 100 in a second car.

Alternatively, the user can remove the child safety seat 115 with the latch pod connector module 110 from the base 105. In this configuration, the user can use the child safety seat 115 with the latch pod connector module 110 to transport the child in other vehicles, such as rideshares. Notably, the latch pod connector module 110 includes a coupling mechanism (not shown), such as ISOFIX, LATCH, LUAS, or Canfix, to secure the child safety seat 115 with the latch pod connector module 110 to a car's seat.

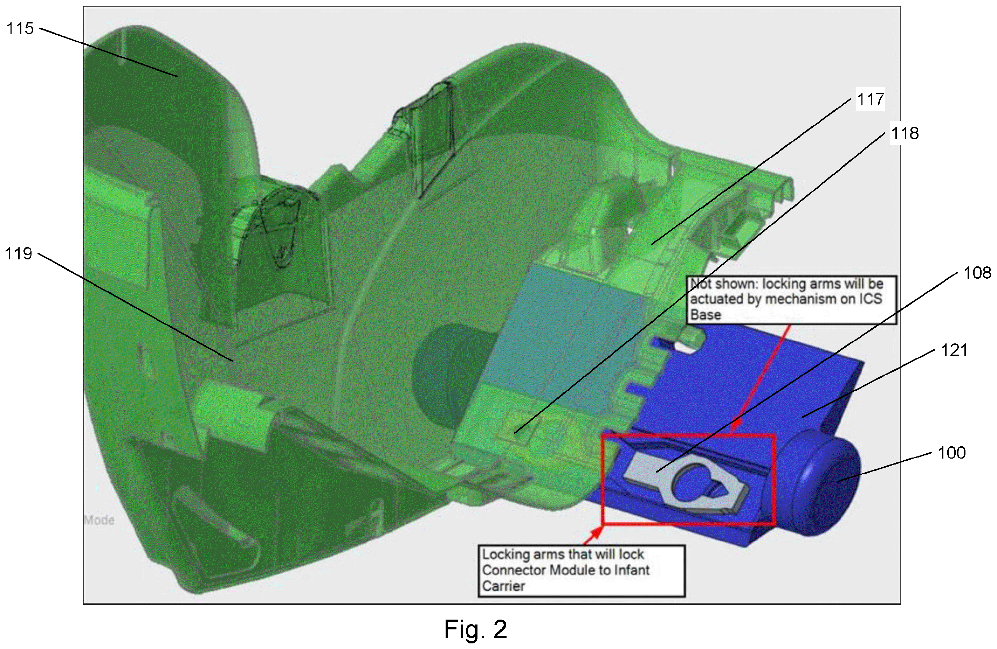

Figure 2 illustrates a perspective view of a child safety seat coupled to a child safety seat latch pod connector module. As seen in Figure 2, the child safety seat 115 has a backrest portion 119 and a seating portion 117. The underside of the seating portion 117 includes a pair of lock components 118. The number, location, and geometry of lock components 118 can vary in alternate embodiments.

The latch pod connector module 100 includes a child seat side 121 which faces, and is generally flush with, the underside of the seating portion 117. The child seat side 121 includes a pair of locking arms 108, which are configured to engage with the pair of lock components 118 on the child safety seat 115. The number, location, and geometry of locking arms 108 and lock components 118 can vary in alternate embodiments. The locking arms 108 can be made of metal or another resilient material.

During use, the locking arms 108 are configured to engage the lock components 118, such that the locking arms 108 and the lock components 118 interlock. Through this interlocking, the child safety seat 115 remains selectively coupled to the latch pod connector module 100. Notably, the user controls this interlocking relationship between the locking arms 108 and lock components 118 by using an actuator located on, for example, the base 105. Consequently, the user controls the coupling and decoupling of the child safety seat 115 and the latch pod connector module 100 via the actuator, further described below.

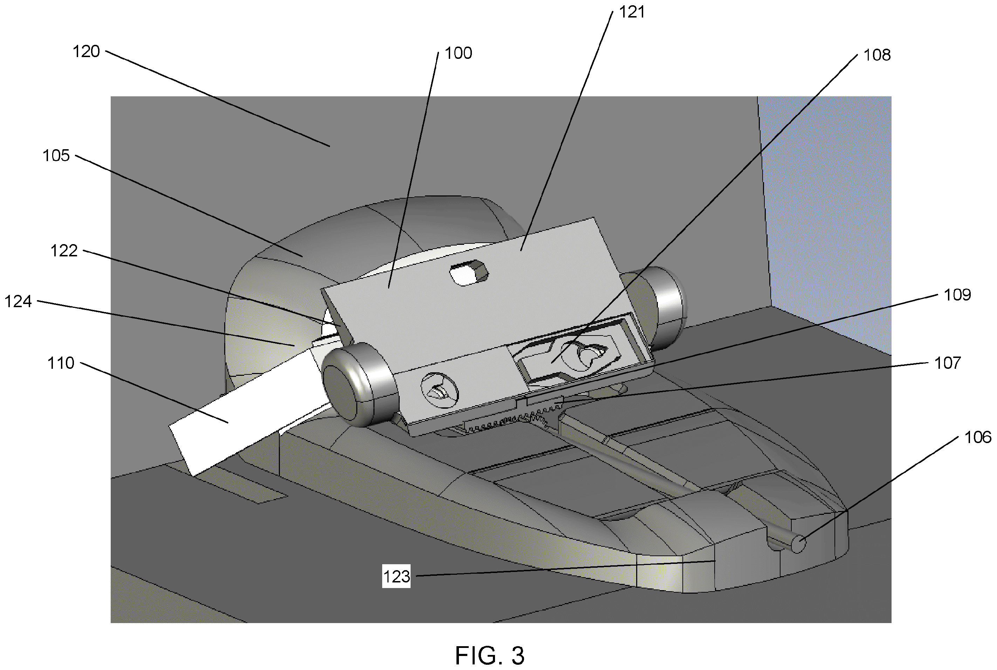

Figure 3 illustrates a perspective view of a base coupled to a child safety seat latch pod connector module. As seen in Figure 3, base 105 has a front portion 123 and a rear portion 124. When the base 105 is placed on a vehicle seat 120, the rear portion 124 is closest to the vehicle belt 110 and the front portion 123 is closest to the front edge of the vehicle seat. The base 105 also includes an actuator 106 near its front portion. Notably, the placement of the actuator 106 can vary in alternate embodiments. The actuator 106 is operatively coupled to an engaging component 107. The engaging component 107 is located on the top of the base 105 near the rear portion 124, such that it engages with latch pod connector module 100 at a connector groove 109. The number, location, and geometry of the engaging component 107 can vary in alternate embodiments. Notably, the connector groove 109 is on an ICS facing side 122 of the latch pod connector module 100.

The engaging component 107 engages with the connector groove 109 such that when the user moves the actuator 106, the locking arms 108 on the child seat side 121 move concurrently. As such, moving the actuator 106 allows the user to selectively interlock the locking arms 108 on the latch pod connector module 100 to the lock components 118 on the child safety seat 115.

Relatedly, the ICS facing side 122 of the latch pod connector module 100 includes an ICS lock (not shown). In this embodiment, the ICS lock selectively couples the base 105 to the latch pod connector module 100. Specifically, the user can move the actuator 106 to selectively engage and disengage the ICS lock. In this embodiment, the same actuator 106 serves to selectively couple the latch pod connector module 100 to the base 105, the child safety seat 115, or both the base 105 and the safety seat 115. However, the actuator 106 is configured such that it cannot cause both the base 105 and the child safety seat 115 to de-couple from the latch pod connector module 100.

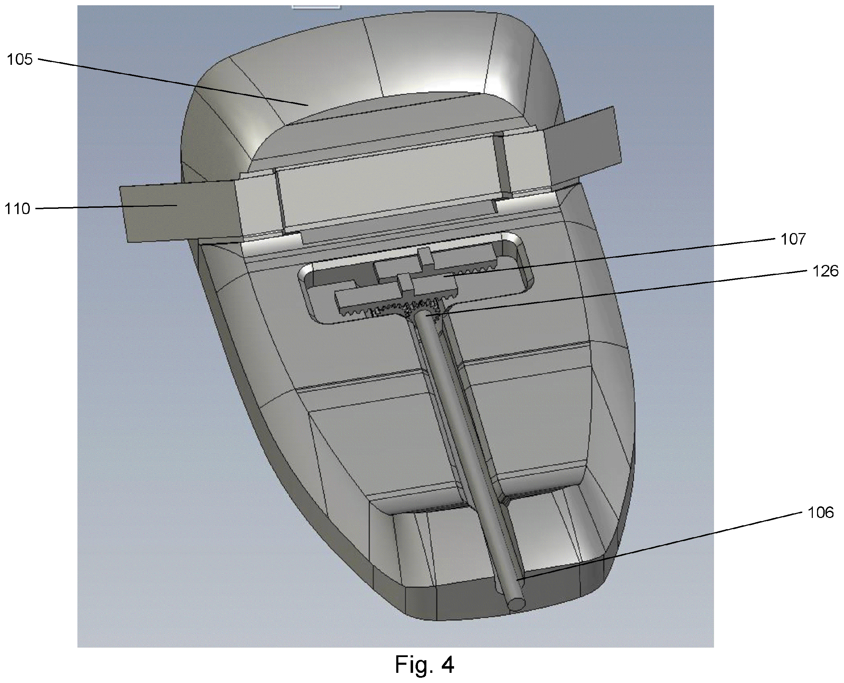

Figure 4 illustrates a perspective view of a base 105. As previously noted, the base 105 receives the vehicle belt 110. The base 105 includes an actuator 106 which operatively couples to an engaging component 107. As seen in figure 4, in an embodiment, the base 105 includes two engaging components 107. In this embodiment, the engaging components 107 is operatively coupled via a set of gears 126. When the user turns the actuator 106 in one direction the gears 126 turn and concurrently move the engaging components 107. As such, the engaging components interact with the locking arms 108 and, or the ICS lock to selectively couple or de-couple the latch pod connector module 100 from, or to, the base 105 and, or the child safety seat 115. In alternate embodiments, the base 105 and the child safety seat 115 have separate actuators for selectively coupling to the latch pod connector module 100.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A child safety seat system comprising:
a child safety seat;
a base; and
a latch pod connector module;
wherein the child safety seat is selectively couples to the latch pod connector module;
wherein the latch pod connector module selectively couples to the base;
wherein the base is configured to selectively couple to a vehicle seat.

2. The system of claim 1, wherein the base comprises an actuator.

3. The system of claim 2, wherein the actuator is operatively coupled to an engagement component.

4. The system of claim 3, wherein the engagement component moves when the actuator is engaged.

5. The system of claim 2, wherein the actuator engages an ICS lock on the base to selectively couple the base to the latch pod connector module.

6. The system of claim 2, wherein the actuator engages at least one locking arm on the child safety seat to selectively couple the child safety seat to the latch pod connector module.

7. The system of claim 1, wherein when the child safety seat couples to the latch pod connector module, the latch pod connector module de-couples from the base.

8. The system of claim 1, wherein when the base couples to the latch pod connector module, the latch pod connector module de-couples from the child safety seat.

9. The system of claim 1, wherein the base couples to the vehicle seat via a vehicle belt.

10. The system of claim 1, wherein the latch pod connector module comprises a connection mechanism configured to couple to a vehicle seat.

11. The system of claim 10, wherein the connection mechanism is one of an ISOFIX, LATCH, LUAS, or Canfix mechanism.

12. A latch pod connector module comprising:
at least one locking arm;
an ICS lock; and
a connection mechanism.

13. The latch pod connector module of claim 12, wherein the at least one locking arm is configured to connect to a child safety seat to couple the latch pod connector to the child safety seat, and wherein the at least one locking arm is activated via an actuator.

14. The latch pod connector module of claim 12, wherein the ICS lock is configured to connect to a base to couple the latch pod connector to the base and wherein the ICS lock is activated via an actuator.

15. The latch pod connector module of claim 12, wherein the connection mechanism is configured to couple to a vehicle seat.

16. The latch pod connector module of claim 15, wherein the connection mechanism is one of an ISOFIX, LATCH, LUAS, or Canfix mechanism.

17. A method of using a latch pod connector child safety seat system, wherein the system comprises a child safety seat, a base and a latch pod connector module, the method comprising:
coupling the child safety seat to the latch pod connector module;
coupling the base to the latch pod connector module; and
coupling the base to a vehicle seat.

18. The method of claim 17, further comprising engaging an actuator on the base to selectively couple the base to the latch pod connector module.

19. The method of claim 17, further comprising engaging an actuator on the base to selectively couple the child safety seat to the latch pod connector module.

20. The method of claim 17, wherein when the child safety seat couples to the latch pod connector module, the latch pod connector module de-couples from the base and wherein when the base couples to the latch pod connector module, the latch pod connector module de-couples from the child safety seat.
